# EUROPÄISCHE PATENTSCHRIFT

(11) **EP 1 867 548 B1**
(45) Veröffentlichungstag und Bekanntmachung des Hinweises auf die Patenterteilung: **16.09.2009**
(21) Anmeldenummer: 07011351.9
(22) Anmeldetag: 11.06.2007
(51) Int. Cl.: B62B 3/10, B62B 5/04, B62B 5/06

(54) **Schiebewagen zum Transport und zur Verwaltung von Gegenständen**
Trolley for transporting and managing objects
Chariot destinée au transport et au traitement d'objets

(30) Priorität: 16.06.2006 DE 102006028171
(43) Veröffentlichungstag der Anmeldung: 19.12.2007
(73) Patentinhaber: Deutsche Post AG, 53113 Bonn (DE)
(72) Erfinder: Heim, Johann, 56072 Koblenz (DE)
(74) Vertreter: Jostarndt, Hans-Dieter

(56) Entgegenhaltungen:
- WO-A-03/057542
- DE-U1- 9 404 448
- DE-U1- 9 404 450
- US-A- 2 253 824

## Beschreibung

Die Erfindung betrifft einen Schiebewagen zum Transport und zur Verteilung von Gegenständen, der wenigstens einen nach oben offenen Behälter zur Aufnahme der Gegenstände umfasst. Der Schiebewagen weist ferner einen gelenkig gelagerten Schiebebügel, Räder und eine Abdeckhaube auf, welche die Öffnung des Behälters abdeckt.

Aus dem Stand der Technik sind verschiedene Schiebewagen bekannt, mit denen Gegenstände transportiert und verteilt werden können. Bei den Gegenständen handelt es sich beispielsweise um Zeitungen, Lebensmittel, Postsendungen oder sonstige Objekte, die von einer Person auf verschiedene Orte verteilt werden. Insbesondere im postalischen Bereich werden Zustellwagen eingesetzt, mit denen Postsendungen wie Briefe oder Pakete von einem Zusteller an Empfängeradressen verteilt werden.

Üblicherweise weisen Schiebewagen für die oben genannten Zwecke wenigstens einen Behälter auf, in den die jeweiligen Gegenstände eingebracht werden, Dabei handelt es sich beispielsweise um einen Sack oder einen kastenförmigen Behälter. Aus dem deutschen Gebrauchsmuster DE 90 15 646 U1 ist beispielsweise ein Handwagen mit einem abnehmbaren Lastbehälter bekannt, der einen Fahrgestellrahmen und eine an den Hinterrädern angreifende Bremseinrichtung umfasst. Ein Lastbehälter, insbesondere in Form einer Lasttasche, ist am Fahrgestellrahmen befestigt.

Vorzugsweise handelt es sich bei dem Schiebewagen um einen Zustellwagen zum Transport von Postgütern.

Insbesondere bei postalischen Zustellwagen ist es üblicherweise erforderlich, dass die Postsendungen beim Transport gegen Wettereinflüsse wie Regen oder Schnee geschützt werden, Dazu werden typischerweise Abdeckplanen oder Abdeckhauben eingesetzt. Das deutsche Gebrauchsmuster DE 94 04 450 U1 offenbart beispielsweise einen Zustellerwagen, der zwei Hauben aufweist, welche um zur Fahrtrichtung parallele Achsen schwenkbar sind. Aus dem deutschen Gebrauchsmuster DE 81 07 519 U1 sind rolloartige Abdeckungen für Zustellwagen bekannt.

Ferner sind Schiebewagen bekannt, bei denen ein Schiebebügel um eine Achse schwenkbar ausgebildet ist. Beispielsweise offenbart die deutsche Patentschrift DE 195 06 029 C2 einen Briefzustellwagen mit einem Fahrtbügel, der aus einer hochgeklappten Betriebsstellung herunterklappbar ist. Durch die Möglichkeit des Herunterklappens wird bei stillstehendem Wagen Platz gespart.

Die WO 03/057542 A2 zeigt einen Schiebewagen, dessen oben offene Seite mit einer Abdeckhaube (49) abgedeckt werden kann, und dessen Schiebebügel (12) mit einem Bremsgestänge (32) verbunden ist.

Aufgabe der Erfindung ist es, ausgehend vom Stand der Technik einen Schiebewagen zum Transport und zur Verteilung von Gegenständen mit einer einfachen Handhabung bereitzustellen. Dabei soll insbesondere ein verbesserter Schutz der Gegenstände gegen Witterungseinflüsse und Diebstahl gewährleistet sein. Ferner soll es sich um einen Schiebewagen handeln, der möglichst kurze Wege beim Be-und Entladen durch einen Bediener ermöglicht.

Erfindungsgemäß wird diese Aufgabe durch einen Schiebewagen mit den Merkmalen des unabhängigen Anspruches 1 gelöst. Vorteilhafte weiterbildungen des Schiebewagens ergeben sich aus den Unteransprüchen 2-11.

Die Erfindung löst die zugrunde liegende Aufgabe auf vorteilhafte Weise dadurch, dass die Öffnung einer Abdeckhaube mit der gleichzeitigen Blockierung der Räder des Schiebewagens verbunden ist. Beide Mechanismen werden durch die Bewegung eines Schiebebügels ausgelöst. Ferner steht der Bediener nach dem Öffnen der Abdeckhaube sofort und unmittelbar vor den in dem Schiebewagen transportierten Gegenständen.

Der erfindungsgemäße Schiebewagen zum Transport und zur Verteilung von Gegenständen umfasst wenigstens einen nach oben offenen Behälter zur Aufnahme der Gegenstände, einen gelenkig gelagerten Schiebebügel, Räder und eine Abdeckhaube, welche die Öffnung des Behälters abdeckt. Erfindungsgemäß ist die Abdeckhaube um eine Achse verschwenkbar, wobei diese Schwenkachse quer zur Fahrtrichtung des Schiebewagens verläuft. Der Schiebebügel steht in Verbindung zu einem ersten Kraftübertragungsmittel, und die Abdeckhaube ist bei einer Bewegung des Schiebebügels durch dieses erste Kraftübertragungsmittel nach oben verschwenkbar. Der Schiebebügel steht ferner in Verbindung zu einem zweiten Kraftübertragungsmittel, wobei die Räder bei der gleichen Bewegung des Schiebebügels durch das zweite Kraftübertragungsmittel blockierbar sind. Dazu steht das zweite Kraftübertragungsmittel in Verbindung mit einer Blockiereinrichtung zum Blockieren der Räder.

In einem Ausführungsbeispiel der Erfindung ist die Abdeckhaube bei einer Anhebung des Schiebebügels nach oben verschwenkbar und die Räder sind bei der Anhebung des Schiebebügels blockierbar. Es kann alternativ jedoch auch vorgesehen sein, dass die Abdeckhaube bei einer Absenkung des Schiebebügels nach oben verschwenkbar ist und die Räder bei der Absenkung des Schiebebügels blockierbar sind.

Ferner ist die Abdeckhaube bei einer Bewegung des Schiebebügels zweckmäßigerweise in eine Richtung entgegen der normalen Fahrtrichtung des Schiebewagens nach oben verschwenkbar. Der Behälter kann ferner fest mit dem Schiebewagen verbunden oder lösbar an ihm befestigt sein.

Das erste und/oder das zweite Kraftübertragungsmittel ist beispielsweise ein gelenkig gelagertes Gestänge oder ein Seilzug. Das Gestänge und/oder der Seilzug können dabei direkt mit der Abdeckhaube oder der Blockiereinrichtung verbunden sein. Der Schiebewagen kann alternativ eine Schaltvorrichtung umfassen, an welcher der Schiebebügel gelenkig gelagert angebracht ist. Die Schaltvorrichtung weist in diesem Fall Mittel zur Erkennung einer Schwenkbewegung des Schiebebügels und Mittel zur Ansteuerung des ersten und/oder zweiten Kraftübertragungsmittels auf. Die Schaltvorrichtung weist dazu elektronische, hydraulische oder pneumatische Mittel zur Ansteuerung des ersten und/oder zweiten Kraftübertragungsmittels auf.

Der wesentliche Vorteil der Erfindung liegt in der Kopplung der Bewegung eines Schiebebügels an das Öffnen einer Abdeckhaube und das gleichzeitige Blockieren von Rädern. Dadurch wird erreicht, dass ein Schiebewagen nicht mit geöffneter Abdeckhaube angeschoben werden kann. Insbesondere bei der Verwendung des Wagens als Zustellwagen für Postsendungen oder Zeitungen kann der Wagen somit zwar mit offenem Behälter stehen gelassen werden, ein Zusteller kann jedoch keine Zustelltour mit durchgehend geöffnetem Behälter durchführen. Die Abdeckhaube steht somit nur kurzfristig bei einer Be- und Entladung des Gutes offen. So sind die Gegenstände in dem Behälter gegen Diebstahl und Witterungseinflüsse geschützt, solange der Schiebewagen in Bewegung ist. Der erfindungsgemäße Zustellwagen unterstützt somit das Bestreben, dass ein Zustellwagen so wenig wie möglich mit offener Abdeckhaube eingesetzt werden soll.

Ferner ist es vorteilhaft, dass der Bediener nach dem Öffnen der Abdeckhaube durch eine Bewegung des Schiebebügels direkt vor dem Behälter steht, in welchem Gegenstände gelagert sind. So kann er Gegenstände wie beispielsweise Postgut einfach entnehmen oder bearbeiten.

Wird der erfindungagemäße Schiebewagen mit einer Schaltvorrichtung ausgeführt, welche die Bewegung des Schiebebügels erfasst und daraufhin Kraftübertragungsmittel zur Bewegung der Abdeckhaube und von Brems- und Blockiervorrichtungen ansteuert, hat dies den Vorteil, dass durch den Schiebebügel indirekt verschiedene Mechanismen ausgelöst werden können, deren Stärke und Ausmaß beliebig variiert werden können.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Von den Abbildungen zeigt:

- Fig. 1: ein besonders bevorzugtes Ausführungsbeispiel des erfindungsgemäßen Schiebewagens mit geschlossener Abdeckhaube; und
- Fig. 2: ein besonders bevorzugtes Ausführungsbeispiel des erfindungsgemäßen Schiebewagens mit geöffneter Abdeckhaube.

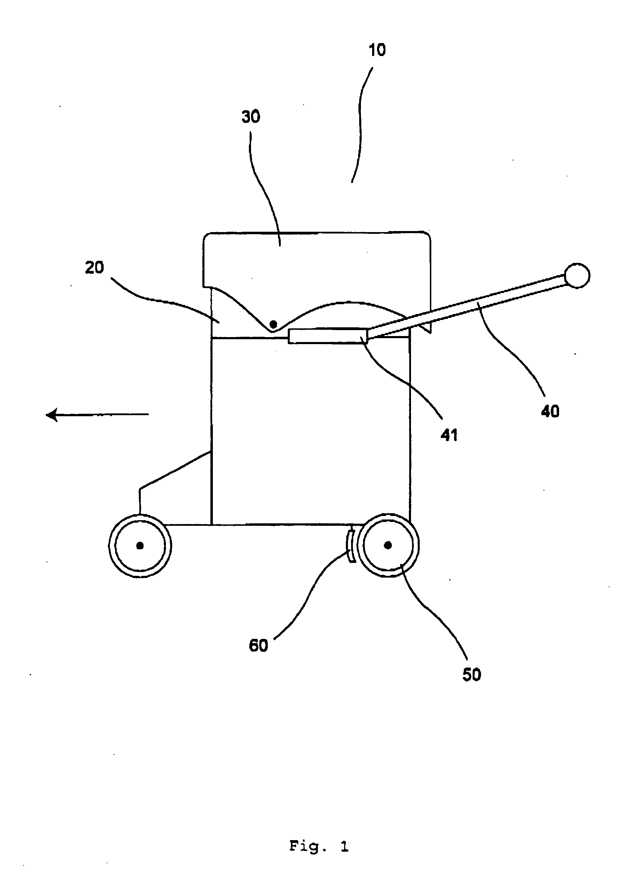

Das in Fig. 1 dargestellte besonders bevorzugte Ausführungsbeispiel des erfindungsgemäßen Schiebewagens umfasst wenigstens einen nach oben offenen Behälter 20 zur Aufnahme und zum Transport von Gegenständen. Bei den Gegenständen kann es sich um jegliche Objekte handeln, welche mit einem per Hand zu schiebenden Wagen transportiert und von einer Person manuell verteilt werden sollen. Dazu gehören beispielsweise Zeitungen, Lebensmittel oder Getränke. Der Schiebewagen eignet sich jedoch insbesondere zum Transport von Postgütern wie Briefen und Paketen, die von einem Zusteller in dem Schiebewagen transportiert, an Zieladressen entnommen und an Empfänger verteilt werden. Der erfindungsgemäße Schiebewagen wird daher im Folgenden auch als postalischer Zustellwagen bezeichnet,

Der Behälter 20 ist dabei vorzugsweise kastenförmig ausgebildet, so dass Briefsendungen und Pakete einfach und Platz sparend in den Behälter eingebracht werden können. Darüber hinaus ist der Behälter 20 vorzugsweise nach oben offen ausgebildet. In einem bevorzugten Ausführungsbeispiel der Erfindung ist der Behälter 20 so dimensioniert, dass er einen genormten Sortierbehälter aus dem postalischen Bereich, in dem sich bereits sortierte Postsendungen befinden, aufnehmen kann. Beispielsweise werden Postsendungen in einem Briefzentrum sortiert bzw. vorsortiert, in verschiedene Behälter eingebracht und anschließend von einem Zusteller in seinem Bezirk verteilt, wobei der erfindungsgemäße Zustellwagen verwendet wird. Die Postsendungen können nun aus dem Sortierbehälter entnommen und in den Behälter 20 des Zustellwagens eingebracht werden. Alternativ kann der gesamte Sortierbehälter in den Behälter 20 des zustellwagens eingestellt werden, wodurch eine Umlagerung der Postsendungen entfällt.

In einem weiteren Ausführungsbeispiel der Erfindung wird der Behälter 20 des Zustellwagens durch einen postalischen Sortierbehälter selbst gebildet. In diesem Fall ist in dem Zustellwagen 10 lediglich eine Aufnahme für einen Behälter vorgesehen, in den ein Sortierbehälter eingebracht werden kann. Ferner können mehrere Behälter oder Aufnahmen für Behälter vorgesehen sein.

Der Schiebewagen umfasst neben einem nach oben offenen Behälter 20 ferner Räder 50 und einen Schiebebügel 40 zum manuellen Anschieben des Wagens durch eine Person. In einem besonders bevorzugten Ausführungsbeispiel der Erfindung umfasst der Schiebewagen drei Räder, wobei ein Vorderrad durch zwei Hinterräder ergänzt wird. Dadurch kann bei großer Wendigkeit eine dennoch stabile Fahrlage erreicht werden.

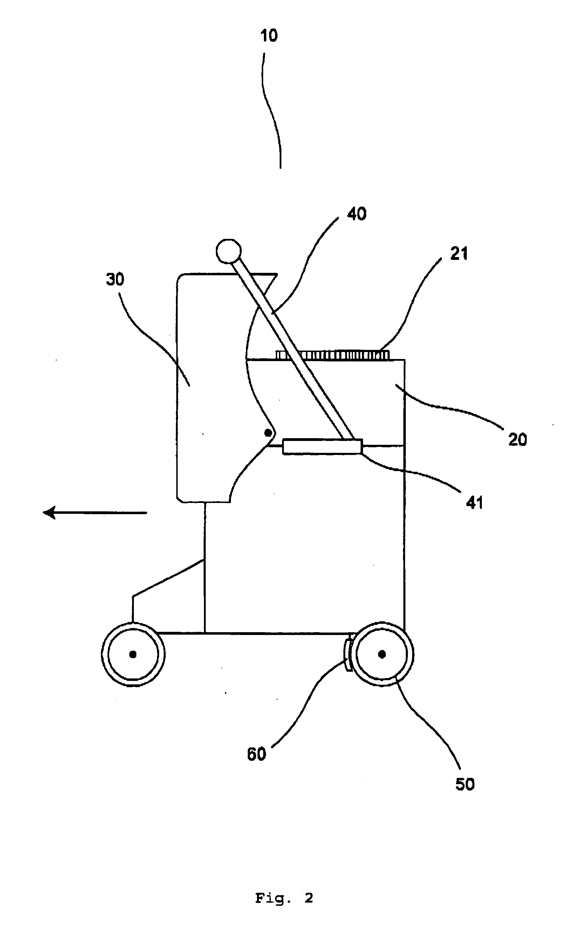

Darüber hinaus sieht der erfindungsgemäße Schiebewagen 10 eine Abdeckhaube 30 vor, welche die Öffnung des Behälters abdeckt. Die Abdeckhaube ist vorzugsweise um eine Achse quer zur Fahrtrichtung des Schiebewagens schwenkbar gelagert, so dass ein Hochschwenken der Abdeckhaube die Öffnung des Behälters 20 freigibt. Der geöffnete Zustand der Abdeckhaube, in dem Gegenstände wie Postgut 21 aus dem Behälter 20 entnommen werden können, ist in Fig. 2 dargestellt. Die Fahrtrichtung des Schiebewagens ist in den Figuren 1 und 2 mit einem Pfeil gekennzeichnet, wobei sich der Schiebebügel 40 stets auf der entgegengesetzten Seite befindet. Es hat sich als besonders vorteilhaft erwiesen, dass die Abdeckhaube bei der Öffnung in Richtung der normalen Fahrtrichtung des Wagens nach oben schwenkt. Dies hat den Vorteil, dass eine Person, welche den Wagen schiebt, von vorne in den Behälter eingreifen kann, ohne dass sie dazu ihre Position verändern muss.

Der Schiebebügel 40 hat beispielsweise die Form einer U-förmigen Stange und ist vorzugsweise gelenkig gelagert an dem Zustellwagen angebracht. Er ist zweckmäßigerweise ebenfalls um eine Achse quer zur Fahrtrichtung des Wagens schwenkbar, so dass er angehoben und abgesenkt werden kann. Der Bügel kann einen Griffbereich aufweisen, der ergonomisch ausgeführt und/oder gepolstert ist.

Die Abdeckhaube 30 ist mit einem ersten Kraftübertragungsmittel verbunden, das in Fig. 1 nicht dargestellt ist. Bei dem ersten Kraftübertragungsmittel kann es sich beispielsweise um ein gelenkig gelagertes Gestänge oder einen Seilzug handeln. Die Abdeckhaube kann über dieses Kraftübertragungsmittel angehoben und abgesenkt werden. Das erste Kraftübertragungsmittel ist erfindungsgemäß so an den Schiebebügel 40 gekoppelt, dass eine Bewegung des Schiebebügels ein Anheben der Abdeckhaube bewirkt, während eine Bewegung des Schiebebügels in die andere Richtung wiederum ein Absenken der Abdeckhaube zur Folge hat. Vorzugsweise bewirkt ein Anheben des Schiebebügels eine Öffnung der Abdeckhaube, während die Haube bei Absenkung des Schiebebügels wieder geschlossen wird. Es kann jedoch auch zweckmäßig sein, diesen Bewegungsmechanismus umzukehren, so dass sich die Abdeckhaube durch ein Absenken des Bügels öffnet und durch ein Anheben wieder schließt. Im Folgenden wird die Funktionsweise des erstgenannten Ausführungsbeispiels näher erläutert.

Bei der Verbindung zwischen dem ersten Kraftübertragungsmittel und dem Schiebebügel kann es sich um eine direkte oder indirekte Kopplung handeln. Bei einer direkten Kopplung ist ein Gestänge oder ein Seilzug zwischen Schiebebügel und Abdeckhaube angeordnet, so dass bei einer Bewegung des Schiebebügels eine direkte Kraftübertragung auf die Abdeckhaube erfolgt. Bei einer indirekten Kopplung kann beispielsweise eine Schaltvorrichtung 41 vorgesehen sein, an welcher der Schiebebügel 40 gelenkig gelagert angebracht ist. Erfolgt eine Bewegung des Schiebebügels, wird diese von der Schaltvorrichtung 41 ausgewertet und das erste Kraftübertragungsmittel wird entsprechend angesteuert.

Die Ansteuerung des ersten Kraftübertragungsmittels kann über elektronische, mechanische, hydraulische oder pneumatische Mittel erfolgen. Die indirekte Kopplung hat den Vorteil, dass unterschiedliche Bewegungen der Abdeckhaube realisiert werden können, ohne dass die gesamte Konstruktion des Zustellwagens verändert werden muss. Ergibt es sich im Laufe des Gebrauchs des Zustellwagens beispielsweise, dass ein Zusteller die vollständige Öffnung der Abdeckhaube vermeidet, indem er den Schiebebügel stets nur leicht anhebt, kann dies dadurch verhindert werden, dass die Schaltvorrichtung so eingestellt wird, dass auch bei einer leichten Anhebung des Schiebebügels eine vollständige Öffnung der Abdeckhaube erfolgt. So kann jedes gewünschte Ausmaß der Öffnung der Abdeckhaube frei eingestellt und gegebenenfalls auch geändert werden. Da bei einer direkten Kopplung des Schiebebügels mit der Abdeckhaube über das erste Kraftübertragungsmittel keine einfache veränderung solcher Charakteristika möglich ist, kann daher für derartige Anwendungen eine indirekte Kopplung über eine Schaltvorrichtung zweckmäßig sein.

Mittels der Schaltvorrichtung 41 kann ferner eine Möglichkeit zur Auswahl realisiert werden, ob die Abdeckhaube beim Anheben oder beim Absenken des Schiebebügels geöffnet werden soll. Dies kann beispielsweise dann von Vorteil sein, wenn an verschiedene Anwendungen des Schiebewagens unterschiedliche Anforderungen gestellt werden oder verschiedene Bedienpersonen unterschiedliche Präferenzen haben.

In einem bevorzugten Ausführungsbeispiel der Erfindung rastet die Abdeckhaube nach dem Öffnen ein. So kann gewährleistet werden, dass die Haube nicht beispielsweise durch einen Windstoß zuklappt. Eine geschlossene Abdeckhaube rastet vorzugsweise ebenfalls ein, um das unerwünschte Öffnen durch einen Windsog zu verhindern.

Der erfindungsgemäße Schiebewagen weist ferner eine Blockier- oder Bremseinrichtung 60 auf, mit welcher die Bewegung der Räder 50 blockiert werden kann. Dabei kann es sich um übliche Blockiermittel -wie auf Reibung basierende Bremsen- oder auch um Bauteile handeln, welche in entsprechende Öffnungen im Rad eingreifen, um ein weiteres Drehen zu verhindern. Beispielsweise können Stifte in Öffnungen in den Rädern eingeschoben werden. In der Fig. 1 ist schematisch eine auf Reibung basierende Bremse 60 dargestellt, welche sich an einem Hinterrad des Zustellwagens 10 befindet. Dabei können selbstverständlich weitere Blockiereinrichtungen an anderen Rädern angeordnet sein. Auch können neben Bremsbacken auf dem Umfang auch Scheiben- oder Trommelbremsen verwendet werden.

Die Bremse 60 steht in Verbindung zu einem zweiten Kraftübertragungsmittel, das in den Figuren ebenfalls nicht dargestellt ist. Auch bei diesem Kraftübertragungsmittel kann es sich beispielsweise um ein gelenkig gelagertes Gestänge oder einen Seilzug handeln, der direkt oder indirekt mit dem Schiebebügel 40 verbunden ist. Bei einer Anhebung des Schiebebügels wird das zweite Kraftübertragungsmittel aktiviert, und ein oder mehrere Räder 50 blockieren in der Form, dass ein Weiterschieben des Wagens nicht möglich ist, Dieser Zustand ist schematisch in Fig, 2 dargestellt. Wird der Schiebebügel wieder abgesenkt, wird die Blockierung gelöst. Für den Fall einer indirekten Kopplung über eine Schaltvorrichtung 41 erkennt die Schaltvorrichtung eine Bewegung des Schiebebügels und steuert daraufhin das zweite Kraftübertragungsmittel entsprechend bestimmter Vorgaben an. Zu den Vorgaben kann beispielsweise die erforderliche Bremskraft gehören, welche variiert werden kann,

In einem besonders bevorzugten Ausführungsbeispiel der Erfindung können die gleichen oder ergänzende Brems- und Blockiermittel auch manuell von einer Person angesteuert werden, ohne dass eine Bewegung des Schiebebügels erfolgt. Dazu kann beispielsweise ein Handhebel am Schiebebügel oder ein Fußhebel an einem oder mehreren Rädern vorgesehen sein.

Die Höhe des Zustellwagens 10 ist vorzugsweise so gewählt, dass sich der Schiebebügel bei geschlossener Abdeckhaube auf Armhöhe einer Bedienperson befindet, so dass der Wagen angenehm zu schieben ist. Da die Größe verschiedener Bedienpersonen variieren kann, hat es sich als zweckmäßig erwiesen, dass die Höhe des Schiebebügels ferner einstellbar ist. Dazu können beispielsweise in einem stangenförmigen Schiebebügel in U-Form zwei Gelenke vorgesehen sein, mit denen sich die Höhe des Griffbereiches des Schiebebügels einstellen und fixieren lässt.

In einem bevorzugten Ausführungsbeispiel der Erfindung ist die Höhe eines Zustellwagens für Postgüter ferner so gewählt, dass ein Bediener gegenüber der Arbeitshöhe an seinem Arbeitsplatz in einem Postverteilzentrum keinen Unterschied erfährt. So ist ein gleich bleibendes ergonomisches und gesundheitsförderndes Arbeiten möglich.

Um das Gewicht des Schiebewagens so gering wie möglich zu halten, kann er beispielsweise aus einem Rohrgerüst mit Stützen und verstrebungen gebildet werden, an dem die verschiedenen Komponenten befestigt sind.

In einem Ausführungsbeispiel der Erfindung kann vorgesehen sein, dass der Mechanismus zur Kopplung des Schiebebügels an die Abdeckhaube deaktiviert werden kann. Beispielsweise kann es vorteilhaft sein, dass der Bediener wählen kann, ob er ein automatisches Öffnen und Schließen der Abdeckhaube wünscht. Bei schönem Wetter oder in Bereichen, in denen der Inhalt des Schiebewagens nicht gegen unerlaubten Zugriff geschützt werden muss, kann der Mechanismus zum automatischen Öffnen und Schließen der Abdeckhaube beispielsweise manuell deaktiviert werden. In diesem Fall kann der Schiebebügel bewegt werden, ohne dass daran eine Bewegung der Abdeckhaube gekoppelt ist.

Der Mechanismus kann deaktiviert, und es kann beispielsweise ein Zustand eingestellt werden, bei dem die Abdeckhaube offen bleibt, auch wenn der Schiebebügel in eine Position bewegt wird, in welcher der Wagen von einem Bediener geschoben werden kann. Will der Bediener die Abdeckhaube dann schließen, kann er dies beispielsweise manuell über die Schaltvorrichtung 41 auslösen. Er kann ferner den Schiebebügel erneut öffnen, den Automatik-Mechanismus wieder aktivieren und die Abdeckhaube durch Bewegung des Schiebebügels wieder schließen.

Auch beim Parken des Schiebewagens kann es zweckmäßig sein, die automatische Kopplung von Schiebebügel und Abdeckhaube zu deaktivieren, um ein Platz sparendes Unterbringen des Wagens zu ermöglichen. Da der wagen mit hoch- oder herunter geklapptem Schiebebügel die geringste Länge aufweist, die Abdeckhaube aber dazu nicht geöffnet werden muss, ist eine Deaktivierung des Mechanismus hier besonders vorteilhaft.

Auch die Kopplung der Bremsmittel an die Bewegung des Schiebebügels kann zweckmäßigerweise deaktiviert werden. Befindet sich der Bediener mit einem Wagen beispielsweise in einem Postverteilzentrum, kann die automatische Blockierung der Räder deaktiviert werden, um ein Durchfahren des Verteilzentrums bei offener Abdeckhaube zu ermöglichen. Dabei hat es sich als zweckmäßig erwiesen, dass die Kopplung des Schiebebügels an die Abdeckhaube und die Bremsmittel getrennt voneinander aktiviert und deaktiviert werden können. So kann die automatische Blockierung der Räder beispielsweise in bestimmten Situationen erwünscht sein, während ein simultanes Öffnen der Abdeckhaube nicht vorteilhaft ist.

Um zu gewährleisten, dass nur bestimmte Personenkreise die automatischen Funktionen des Schiebewagens aktivieren und deaktivieren können, kann beispielsweise ein Schlüssel vorgesehen sein, mit dem mechanische oder elektronische Komponenten des Wagens beeinflusst werden können. Beispielsweise kann vorgesehen sein, dass der Zugriff auf die Schaltvorrichtung 41 nur bestimmten Personenkreisen ermöglicht wird.

In einem weiteren Ausführungsbeispiel der Erfindung kann der Schiebewagen eine Warnblinkanlage aufweisen, die ebenfalls an die Bewegung des Schiebebügels gekoppelt ist. Wird der Schiebebügel so bewegt, dass sich die Abdeckhaube öffnet, wird beispielsweise eine LED-Warnblinkanlage aktiviert. So kann dem Umfeld und insbesondere dem Bediener des Schiebewagens angezeigt werden, dass sich der Wagen in einem Zustand befindet, der besondere Aufmerksamkeit erfordert. Wird die Abdeckhaube wieder durch eine Bewegung des Schiebebügels geschlossen, wird die Warnblinkanlage deaktiviert und der Wagen ist wieder fahrbereit.

### Bezugszeichenliste:

- 10: Schiebewagen, Zustellwagen
- 20: Behälter
- 21: Gegenstand, Postgut
- 30: Abdeckhaube
- 40: Schiebebügel
- 41: Schaltvorrichtung
- 50: Rad
- 60: Blockiermittel, Bremsmittel

## Patentansprüche

1. Schiebewagen zum Transport und zur Verteilung von Gegenständen, der wenigstens einen nach oben offenen Behälter (20) zur Aufnahme der Gegenstände (21), einen gelenkig gelagerten Schiebebügel (40), Räder (50) und eine Abdeckhaube (30), welche die Öffnung des Behälters (20) abdeckt, umfasst,
wobei die Abdeckhaube (30) um eine Achse verschwenkbar ist, wobei diese Schwenkachse quer zur Fahrtrichtung des Schiebewagens (10) verläuft und der Schiebebügel (40) in Verbindung zu einem ersten Kraftübertragungsmittel steht und die Abdeckhaube (30) bei einer Bewegung des Schiebebügels (40) durch das erste Kraftübertragungsmittel nach oben verschwenkbar ist und dass der Schiebebügel (40) in Verbindung zu einem zweiten Kraftübertragungsmittel steht, wobei die Räder (50) bei der gleichen Bewegung des Schiebebügels (40) durch das zweite Kraftübertragungsmittel blockierbar sind, und das zweite Kraftübertragungsmittel in Verbindung mit einer Blockiereinrichtung (60) zum Blockieren der Räder steht.

2. Schiebewagen nach Anspruch 1,
**dadurch gekennzeichet**,
**dass** die Abdeckhaube (30) bei einer Anhebung des Schiebebügels (40) nach oben verschwenkbar ist und die Räder (50) bei der Anhebung des Schiebebügels (40) blockierbar sind.

3. Schiebewagen nach Anspruch 1,
**dadurch gekennzeichnet,**
**dass** die Abdeckhaube (30) bei einer Absenkung des Schiebebügels (40) nach oben verschwenkbar ist und die Räder (50) bei der Absenkung des Schiebebügels (40) blockierbar sind.

4. Schiebewagen nach einem oder mehreren der vorangegangenen Ansprüche 1 bis 3,
**dadurch gekennzeichnet**
**dass** der Schiebewagen (10) ein Zustellwagen zum Transport von Postgütern ist.

5. Schiebewagen nach einem oder mehreren der vorangegangenen Ansprüche 1 bis 4,
**dadurch gekennzeichnet,**
**dass** die Abdeckhaube (30) bei einer Bewegung des Schiebebügels (40) in eine Richtung entgegen der normalen Fahrtrichtung des Schiebewagens (10) nach oben verschwenkbar ist.

6. Schiebewagen nach einem oder mehreren der vorangegangenen Ansprüche 1 bis 5,
**dadurch gekenntzeichnet,**
**dass** das erste und/oder das zweite Kraftübertragungsmittel ein gelenkig gelagertes Gestänge ist.

7. Schiebewagen nach einem oder mehreren der vorangegangenen Ansprüche 1 bis 5,
**dadurch gekennzeichnete,**
**dass** das erste und/oder das zweite Kraftübertragungsmittel ein Seilzug ist.

8. Schiebewagen nach einem oder beiden der Ansprüche 6 und 7,
**dadurch gekenntzeichnet**,
**dass** das Gestänge und/oder der Seilzug direkt mit der Abdeckhaube (30) oder der Blockiereinrichtung (60) verbunden sind.

9. Schiebewagen nach einem oder mehreren der vorangegangenen Ansprüche 1 bis 8,
**dadurch gekennzeichnet,**
**dass** der Schiebewagen (10) eine Schaltvorrichtung (41) umfasst, an welcher der Schiebebügel (40) gelenkig gelagert angebracht ist und dass die Schaltvorrichtung (41) Mittel zur Erkennung einer Schwenkbewegung des Schiebebügels (40) und Mittel zur Ansteuerung des ersten und/oder zweiten Kraftübertragungsmittels aufweist.

10. Schiebewagen nach Anspruch 9,
**dadurch gekennzeichnet,**
**dass** die Schaltvorrichtung elektronische, hydraulische Mittel oder pneumatische Mittel zur Ansteuerung des ersten und/oder zweiten Kraftübertragungsmittels aufweist.

11. Schiebewagen nach einem oder mehreren der vorangegangenen Ansprüche 1 bis 10,
**dadurch gekennzeichnet,**
**dass** der Behälter (20) fest mit dem Schiebewagen (10) verbunden oder lösbar an ihm befestigt ist.

## Claims

1. A pushcart for transporting and distributing objects, comprising at least one container (20) that is open towards the top and that serves to hold the objects (21), a hinged pushbar (40), wheels (50) and a covering hood (30) that covers the opening of the container (20),
whereby the covering hood (30) can be pivoted around an axis, whereby this pivot axis runs crosswise to the direction of travel of the pushcart (10), and the pushbar (40) is connected to a first force transmission means, and, when the pushbar (40) is moved, the covering hood (30) can be pivoted upwards by the first force transmission means, and whereby the pushbar (40) is connected to a second force transmission means, whereby, with the same movement of the pushbar (40), the wheels (50) can be blocked by the second force transmission means, and the second force transmission means is connected to a blocking mechanism (60) for blocking the wheels.

2. The pushcart according to Claim 1,
**characterized in that,**
when the pushbar (40) is lifted, the covering hood (30) can be pivoted upwards and, when the pushbar (40) is lifted, the wheels (50) can be blocked.

3. The pushcart according to Claim 1,
**characterized in that,**
when the pushbar (40) is lowered, the covering hood (30) can be pivoted upwards and, when the pushbar (40) is lowered, the wheels (50) can be blocked.

4. The pushcart according to one or more of the preceding Claims I to 3,
**characterized in that**
the pushcart (10) is a delivery cart for transporting mailpieces.

5. The pushcart according to one or more of the preceding Claims 1 to 4,
**characterized in that,**
when the pushbar (40) is moved in a direction opposite to the normal direction of travel of the pushcart (10), the covering hood (30) can be pivoted upwards.

6. The pushcart according to one or more of the preceding Claims 1 to 5,
**characterized in that,**
the first and/or the second force transmission means is a hinged linkage.

7. The pushcart according to one or more of the preceding Claims 1 to 5,
**characterized in that,**
the first and/or the second force transmission means is a cable control.

8. The pushcart according to one or both of Claims 6 and 7,
**characterized in that**
the linkage and/or the cable control are directly connected to the covering hood (30) or to the blocking mechanism (60).

9. The pushcart according to one or more of the preceding Claims 1 to 8,
**characterized in that,**
the pushcart (10) comprises an operating device (41) to which the pushbar (40) is attached in a hinged manner, and **in that** the operating device (41) has means to recognize a pivoting movement of the pushbar (40) and means to actuate the first and/or the second force transmission means.

10. The pushcart according to Claim 9,
**characterized in that**
the operating device has electronic, hydraulic or pneumatic means to actuate the first and/or the second force transmission means.

11. The pushcart according to one or more of the preceding Claims 1 to 10,
**characterized in that**
the container (20) is attached to the pushcart (10) permanently or else is connected to it detachably.

## Revendications

1. Chariot à pousser destiné au transport et à la distribution d'objets, lequel comprend au moins un contenant (20) ouvert vers le haut et destiné à recevoir les objets (21), une tige (40) servant à pousser le chariot et logée de manière articulée, des roues (50) et un capot (30) qui recouvre l'ouverture du contenant (20),
le capot (30) pouvant pivoter autour d'un axe, cet axe de pivotement étant transversal par rapport au sens de déplacement du chariot à pousser (10) et la tige servant à pousser le chariot (40) étant reliée à un premier moyen de transmission de force et le capot (30) pouvant pivoter vers le haut du fait du premier moyen de transmission de force lors d'un mouvement de la tige servant à pousser le chariot (40) et la tige servant à pousser le chariot (40) étant reliée à un deuxième moyen de transmission de force, les roues (50) pouvant être bloquées par le deuxième moyen de transmission de force lors du même mouvement de la tige servant à pousser le chariot (40) et le deuxième moyen de transmission de force étant relié à un dispositif de blocage (60) pour bloquer les roues.

2. Chariot à pousser selon la revendication 1, **caractérisé en ce que** le capot (30) peut pivoter vers le haut lors d'un soulèvement de la tige servant à pousser le chariot (40) et les roues (50) peuvent être bloquées lors du soulèvement de la tige servant à pousser le chariot (40).

3. Chariot à pousser selon la revendication 1, **caractérisé en ce que** le capot (30) peut pivoter vers le haut lors d'un abaissement de la tige servant à pousser le chariot (40) et les roues (50) peuvent être bloquées lors de l'abaissement de la tige servant à pousser le chariot (40).

4. Chariot à pousser selon l'une ou plusieurs des revendications précédentes 1 à 3, **caractérisé en ce que** le chariot à pousser (10) est un chariot de distribution destiné au transport d'envois postaux.

5. Chariot à pousser selon l'une ou plusieurs des revendications précédentes 1 à 4, **caractérisé en ce que** le capot (30) peut pivoter vers le haut lors d'un mouvement de la tige servant à pousser le chariot (40) dans un sens opposé au sens de déplacement normal du chariot à pousser (10).

6. Chariot à pousser selon l'une ou plusieurs des revendications précédentes 1 à 5, **caractérisé en ce que** le premier et/ou le deuxième moyen de transmission de force sont un ensemble de tiges logées de manière articulée.

7. Chariot à pousser selon l'une ou plusieurs des revendications précédentes 1 à 5, **caractérisé en ce que** le premier et/ou le deuxième moyen de transmission de force sont un câble de transmission.

8. Chariot à pousser selon l'une ou les deux revendications 6 et 7, **caractérisé en ce que** l'ensemble de tiges et/ou le câble de transmission sont reliés directement au capot (30) ou au dispositif de blocage (60).

9. Chariot à pousser selon l'une ou plusieurs des revendications précédentes 1 à 8, **caractérisé en ce que** le chariot à pousser (10) comprend un dispositif de commande (41) sur lequel la tige servant à pousser le chariot (40) est logée de manière articulée et **en ce que** le dispositif de commande (41) présente des moyens de reconnaissance d'un mouvement pivotant de la tige servant à pousser le chariot (40) et des moyens d'actionner du premier et/ou du deuxième moyen de transmission de force.

10. Chariot à pousser selon la revendication 9, **caractérisé en ce que** le dispositif de commande présente des moyens électroniques, hydrauliques ou pneumatiques pour actionner le premier et/ou le deuxième moyen de transmission de force.

11. Chariot à pousser selon l'une ou plusieurs des revendications précédentes 1 à 10, **caractérisé en ce que** le contenant (20) est solidaire du chariot à pousser (10) ou y est fixé de manière détachable.
